# EUROPEAN PATENT SPECIFICATION

(11) **EP 4 339 503 B1**
(45) Date of publication and mention of the grant of the patent: **20.05.2026**
(21) Application number: 22382847.6
(22) Date of filing: 13.09.2022
(51) Int. Cl.: F17C 3/08

(54) **A DOUBLE-WALL TANK AND AN ASSEMBLING METHOD OF SAID DOUBLE-WALL TANK**
DOPPELWANDIGER TANK UND VERFAHREN ZUR MONTAGE DES DOPPELWANDIGEN TANKS
RÉSERVOIR À DOUBLE PAROI ET PROCÉDÉ D'ASSEMBLAGE DUDIT RÉSERVOIR À DOUBLE PAROI

(43) Date of publication of application: 20.03.2024
(73) Proprietor: Airbus Operations, S.L.U., 28906 Getafe (Madrid) (ES)
(72) Inventor: BALLESTERO MÉNDEZ, Jorge, E-28906 Getafe, Madrid (ES)
(74) Representative: ABG Intellectual Property Law, S.L.

(56) References cited:
- US-A- 5 651 473
- US-A1- 2006 169 704

## Description

### TECHNICAL FIELD OF THE INVENTION

The present invention belongs to the field of fluid storage systems and manufacturing methods of said fluid storage systems. Particularly, the present invention refers to a double-wall tank comprising at least one piping connecting system and to a method for assembling a double-wall tank provided with at least one piping connecting system.

### BACKGROUND OF THE INVENTION

Due to environmental reasons, challenges to reduce the use of fossil fuels must be increasingly faced. In this scenario, hydrogen produced on the basis of renewable energy is a reasonable candidate for efficient energy supply. Its high energy density makes it an emerging alternative fuel for aircraft applications.

In particular, hydrogen is an attractive fuel for high-altitude short-medium range aircraft because it contains about 6.2 times the energy per kilogram as compared with traditional hydrocarbon fuels. Therefore, in aircraft applications, said high specific energy of hydrogen may be a key enabler. However, practical considerations have largely prevented its use. While the specific energy of hydrogen is very high, the energy per unit volume is comparatively low. Liquid hydrogen enhances its energy density relative to gaseous form while allowing to reduce the mass of the tank required to confine the hydrogen within as a result of the lower pressure in liquid state. Liquid hydrogen at 20 K and 1 bar pressure has a density of 70 g/l compared to the 40 g/l of gaseous hydrogen at 88 K and 700 bar. Only cryo-compressed hydrogen has a higher density, with a value of 80 g/l at 38 K and 300 bar. According to these parameters, liquefied cryogenic form allows efficient storage at low pressure.

In this regard, LH2 cryotanks are one of the key components of the structure of future generations of heavy lift launch vehicles, space exploration structures and new green aircrafts. It is in aircraft where the greatest challenges lie in developing hydrogen storage systems because of the need for higher dormancy times requiring good insulating solutions, permeation properties, combined with reduced weight. Some of the key challenges are geometry, temperature, hydrogen embrittlement, permeation, leakage, etc.

In order to take advantage of the high specific energy of hydrogen, the associated tanks should be preferably light weight and must be thermally insulated. The method of insulating a tank must deal with several types of heat transfer: conduction through solids, conduction and convention through gas, and radiation. Most methods of effecting high-performance insulation rely on an ultra-vacuum to nearly eliminate the conduction and convection gas heat transfer.

Taking into account the aforementioned conditions, known solutions currently in use, which are implemented in industries other than the aeronautical industry and are therefore not constrained by said high-demanding conditions in which aircraft operate, consist of tanks that include structures and elements such as the following:
- Double-wall tanks comprising an outer jacket and an inner pressure vessel. These double-wall tanks are normally made from aluminium or steel, and are among the most conventional tanks used, mainly because they are the cheapest tanks to manufacture. However, they are also the heaviest type of tanks used for confining cryo-compressed hydrogen.
- Metallic pressure vessel/liner with a composite reinforcement overwrap. The metal and the composite material share structural load. Manufacturing costs with respect to the previous alternative are reduced and also the weight is significantly reduced.

Document US5651473 describes a support system for cryogenic vessels.

### SUMMARY OF THE INVENTION

The present invention provides a double-wall tank according to claim 1 and a method for manufacturing a double-wall tank according to claim 8. In the dependent claims, embodiments of the invention are defined.

In a first inventive aspect, the invention provides a double-wall tank comprising:
- an inner wall defining an inner chamber configured to house a fluid, wherein the inner wall comprises at least one inner wall hole;
- an outer wall defining an outer chamber which houses the inner chamber within, wherein the outer wall comprises at least one outer wall hole,
- a piping connecting system comprising:
   ∘ at least one inner connecting part coupled to the inner wall, wherein the inner connecting part comprises at least one inner part hole, and wherein the inner connecting part is positioned relative to the inner wall such that the inner part hole and the inner wall hole of the inner wall are coincident; and
   ∘ at least one outer connecting part coupled to the outer wall, wherein the outer connecting part comprises at least one outer part hole, and wherein the outer connecting part is positioned relative to the outer wall such that the outer part hole and the outer wall hole of the outer wall are coincident;
   and
- at least one pipe arranged passing:
   ∘ through an outer part hole and through an outer wall hole; and
   ∘ through an inner part hole and through an inner wall hole,

wherein the pipe is coupled, by means of a fluid-tight fit, to said inner part hole and said outer part hole,
wherein the inner wall and the outer wall are composed of a thermoset carbon fibre reinforced polymer ('CFRP- TS'), andwherein the at least one inner connecting part and the at least one outer connecting part are metallic or made of Fibre Reinforced Polymer (FRP), preferably a Thermoplastic Carbon Fibre Reinforced Polymer (CFRP-TP).

The double-wall tank according to the invention comprises four basic structural elements: an inner chamber intended for housing a fluid within, and which is defined by the inner wall of the so called double-wall tank; an outer chamber, defined by the outer wall, which is arranged surrounding said inner chamber, said inner and outer walls being separated by a distance defined by an intermediate gap between them; a piping connecting system; and at least one pipe coupled, by means of a fluid-tight fit, to said piping connecting system.

Also, from another structural approach to the double-walled tank, it may be understood that the inner wall defines an inner vessel, whereas the outer wall defines an outer jacket that surrounds and encloses said inner vessel within.

The intermediate gap between the inner wall and the outer wall is intended for providing thermal insulation to the inner chamber. In particular, said inner chamber, in the case of containing a cryo-compressed fluid, such as hydrogen, will be exposed to extremely low temperatures. Accordingly, said intermediate gap undergoes, during operation, a thermal gradient according to which temperatures will progress from a lower limit corresponding to the temperature of the outer surface of the inner wall defining the inner chamber, to an upper limit corresponding to the temperature of the inner surface of the outer wall, that is, a temperature close to the room temperature surrounding the double-wall tank.

The piping connecting system and the at least one pipe are configured to allow access to the inner chamber, while assuring the tightness of the fluid stored inside the inner chamber and allowing keeping a vacuum in the gap between the inner wall and the outer wall. This is achieved by at least one inner connecting part coupled to the inner wall and at least one outer connecting part coupled to the outer wall.

The inner wall comprises at least one inner wall hole. The inner connecting part comprises at least one inner part hole and is positioned relative to the inner wall such that an inner part hole and an inner wall hole of the inner wall are coincident, thus allowing the pass of a pipe through the inner part hole and through the inner wall hole.

In turn, the outer wall comprises at least one outer wall hole. The outer connecting part comprises at least one outer part hole and is positioned relative to the outer wall such that an outer part hole and an outer wall hole of the outer wall are coincident, thus allowing the pass of the pipe through an outer part hole and through an outer wall hole.

The pipe is coupled, by means of a fluid-tight fit, to the corresponding inner part and outer part holes by coupling the pipe to the inner connecting part and to the outer connecting part, without acting on the inner or outer wall, thus preserving the structural integrity of the tank. This avoids having to perform welding operations directly on the corresponding inner or outer wall that could locally affect or damage the structural integrity of said wall. In this regard, it also avoids machining or using bolts or rivets to attach and anchor the pipes to the inner and/or outer walls of the tank, which could lead to the appearance of stress accumulation areas that could favour the initiation and propagation of cracks or even corrosion.

Advantageously, the present invention provides high level of product flexibility thanks to the inner and outer connecting part. In particular, said connecting parts provide a connecting interface between the corresponding inner or outer wall and the mechanical piping systems, thus avoiding direct contact between them, which allow to select the material of the pipes and the corresponding wall independently of each other. It shall be understood that any connecting part coupled to the inner wall or to the outer wall is coupled to the corresponding wall by means of a fluid-tight fit.

Advantageously, the use of composite materials for the manufacturing of the walls provides the benefits of composite material in terms of material performance, weight saving, material cost, production and industrialization features.

The use of composite materials for the inner and/or outer walls results in a much lighter double-wall tank compared to conventional tanks using metallic parts. Furthermore, the Gravimetric Index (GI), that is, the weight of liquid hydrogen vs. the weight of the tank is also improved compared to a metallic tank, reaching maximum values close to 50%, compared to typical values of metallic tanks ranging between 30-35%.

Advantageously, by virtue of the reduced weight properties of the double-wall tank of the invention provided by the use of composite materials, as well as of the optimum insulation properties provided by the vacuum kept in the intermediate gap between the inner wall and the outer wall, the double-wall tank of the invention provides a solution to the greatest challenges in developing hydrogen storage systems which require high dormancy times necessary for commercial aeronautics applications.

The vacuum condition in said gap between the inner wall and the outer wall, may in a particular embodiments of the double-wall tank be under ultra-high vacuum (UHV) conditions. According to this vacuum regime, operating pressure is lower than about 100 nanopascals (1.0×10⁻⁷ Pa; 1.0×10⁻⁹ mbar; 7.5×10⁻¹⁰ Torr).

In an embodiment, the double-wall tank comprises a thermal insulation layer provided in the gap between the inner wall and the outer wall, said thermal insulation layer being arranged enveloping at least partially the inner wall.

Other particular embodiments of a thermal insulation layer comprise at least one of the following materials: aerogel, bubble wrap and/or foam material.

Regarding the geometric configuration of the double-wall tank, in one embodiment the inner and outer chambers have the same shape, wherein the outer chamber housing the inner chamber has a larger size.

In one embodiment, the inner and outer walls comprise at least one dome-shaped portion, said portions being arranged facing one another, each dome-shaped portion having a convex outer side and a concave inner side.

It shall be understood that, regarding the orientation or disposition of the dome-shaped portions, the concave inner side will be oriented towards the interior of the tank.

From an architectural and geometric perspective, a dome-shaped structure, in the sense of the present invention, may be understood as a spherical cap, that is, as any portion of a sphere resulting from being cut by a plane. It may also have slightly different concave-convex shapes such as for example a paraboloid shape.

In a more particular embodiment, the inner connecting part and/or the outer connecting part of the piping connecting system are arranged at the dome-shaped portions of the inner or outer wall.

In one embodiment, the inner and outer chambers have a spherical shape.

In one embodiment, the two chambers have two dome-shaped portions disposed at two ends of a central cylindrical section.

In an embodiment, at least one pipe is arranged passing through corresponding outer and inner part holes, parallel to the axis of the cylindrical section of each chamber.

In an embodiment, at least one inner connecting part is a bushing coupled, by means of a fluid-tight fit, to a corresponding inner wall hole.

In an embodiment, the bushing comprises a cylindrical main body and a flange projecting radially outwardly from the cylindrical main body, wherein said flange is arranged on an inner side of the inner wall facing the interior of the inner chamber when the bushing is arranged on the inner wall.

In a case where the gap between the inner wall and the outer wall is under vacuum conditions, the direction of the operating pressures to which the inner wall and the outer wall, as well as the elements attached to them, are exposed, will be opposite. In particular, in the case of the inner wall, the pressure is positive from the inside of the inner chamber, towards the outside of the inner chamber, i.e. towards the intermediate space between the inner wall and the outer wall. By arranging the flange on the side of the inner wall facing the interior of the inner chamber, the vacuum suction favours the efficiency of the connection tightness at the interfaces between the inner wall and the bushing, as the pressure exerts a force to keep the contact between both elements. Furthermore, said flange serves as a mechanical obstacle that prevents the bushing from uncoupling due to the effect of vacuum suction.

In an embodiment, at least one outer connecting part is a bushing coupled, by means of a fluid-tight fit, to a corresponding outer wall hole.

In an embodiment, the bushing comprises a cylindrical main body and a flange projecting radially outwardly from the cylindrical main body, wherein said flange is arranged on an outer side of the outer wall facing the outside of the tank when the bushing is arranged on the outer wall.

The outer wall is subjected to a negative pressure from the outside of the tank towards the intermediate gap between the inner wall and the outer wall. By arranging the flange on the side of the outer wall facing the outside of the tank, the vacuum suction favours the efficiency of the connection tightness at the interfaces between the outer wall and the bushing, as the pressure exerts a force to keep the contact between both elements. Furthermore, said flange serves as a mechanical obstacle that prevents the bushing from uncoupling due to the effect of vacuum suction.

In an embodiment, at least one bushing is embedded into a corresponding inner or outer wall made of FRP material.

The bushing may have been provided at intermediate stages of the manufacture and consolidation of said inner or outer wall, or inserted, after said wall has been completely cured, within a built-in hole or groove provided during the manufacturing process.

There may be a 'co-bonding' or 'adhesive' joint line between the resin of the FRP material of the corresponding wall and the bushing coupled thereto. Said joint line ensures, in the particular case of the inner wall, the tightness of the inner vessel (i.e., the inner chamber intended for housing the fluid) and, in the particular case of the outer wall, the vacuum conditions maintained in the intermediate gap defined between the inner wall and the outer wall.

In a more particular embodiment, the inner or outer wall in which the bushing is embedded is made of a CFRP-TS, which provides a robust assembly, with optimal mechanical strength and sealing properties.

In an embodiment, at least one bushing and the corresponding wall to which the bushing is coupled are provided, respectively, with a frustoconical geometry.

In particular, according to said frustoconical geometry, the minor base of the bushing is oriented towards the intermediate gap between the inner wall and the outer wall. In this way, the effect of the pressure difference between each side of the wall, presses the bushing and the inner wall against each other along their respective conical surfaces, thus promoting the contact between them and increasing the structural integrity of the resulting assembly as well as the tightness of the joint.

In an embodiment, the inner wall and the outer wall comprise, respectively, a plurality of inner wall holes and outer wall holes, wherein the tank further comprises a plurality of pipes and wherein each of the plurality of pipes is arranged passing:
- through an outer wall hole; and
- through an inner wall hole.

In a preferred embodiment, each one of the inner wall holes and the outer wall holes is crossed by only one pipe at a time.

In an embodiment, at least one inner connecting part comprises a plurality of inner part holes and/or the tank comprises a plurality of inner connecting parts; the one or more inner connecting parts being positioned relative to the inner wall such that the inner part holes and the inner wall holes are coincident.

In an embodiment, at least one outer connecting part comprises a plurality of outer part holes and/or the tank comprises a plurality of outer connecting parts; the one or more outer connecting parts being positioned relative to the outer wall such that the outer part holes and the outer wall holes are coincident.

The piping connecting system may include one or more inner connecting parts and one or more outer connecting parts. Each inner connecting part may include one or more inner part holes and each outer connecting part may include one or more outer part holes to allow access of one or more pipes. Thus, the required number of inner/outer part holes may be provided arranging one or more inner/outer connecting parts each having one or more inner/outer part holes.

In an embodiment, at least one of the inner or outer connecting part is configured as a sheet having a shape that matches the shape of the corresponding inner or outer wall to which the inner or outer connecting part is coupled.

In a particular embodiment in which at least one of the inner and outer wall has a dome-shaped portion on which the corresponding inner/outer connecting part is arranged, said connecting part also comprises a dome-shaped geometry, that is, a curved sheet with a spherical cap shape. In an embodiment, said inner/outer connecting part comprises a number of part holes identical to the number of wall holes provided on the corresponding inner or outer wall on which the connecting part is coupled.

In an embodiment, at least a portion of the inner wall and at least a portion of the inner connecting part surrounding the inner part holes are overwrapped by a layer of FRP material.

In an embodiment, at least a portion of the outer wall and at least a portion of the outer connecting part surrounding the outer part holes are overwrapped by a layer of FRP material.

Advantageously, by overwrapping, at least partially, the inner/outer connecting part and the inner/outer wall with FRP material, the inner/outer connecting part becomes embedded in FRP material, improving its coupling and structural integrity with the inner/outer wall.

In an embodiment, the gap between the inner wall and the outer wall is under vacuum conditions.

According to one variant of the invention, at least one inner connecting part and/or at least one outer connecting part is metallic, preferably made of INVAR.

INVAR is an austenitic nickel-iron alloy which has an extremely low coefficient of thermal expansion (CTE) from -250°C to 200°C. Additionally, INVAR has good fatigue and mechanical properties at cryogenic temperatures.

Advantageously, the elements made of INVAR contribute to minimise the thermal loads arising due to the temperature gradients experienced on each element, as well as to avoid corrosion issues in their contact with the elements which may be made of a polymeric material.

Advantageously, this embodiment enables welding technology for the coupling between the inner/outer connecting part and the pipe, thus providing a better tightness behaviour and ultra-vacuum maintenance.

Additionally, in embodiments wherein elements made with INVAR and CFRP-TS are combined, such as embodiments in which a bushing made of INVAR is embedded into an inner or outer wall made of CFRP-TS, the stress produced by the thermal expansion of the coupled elements is reduced. This is due to INVAR and CFRP-TS having similar coefficients of thermal expansion.

According to a variant of the invention, at least one inner connecting part and/or at least one outer connecting part is made of FRP, preferably a thermoplastic carbon fibre reinforced polymer ('CFRP-TP').

Advantageously, providing connecting parts according to this embodiment optimizes weight saving, tightness behaviour and contributes to maintain ultra-high vacuum (UHV) conditions in the intermediate gap defined between the inner wall and the outer wall, everything while coping with thermal expansion and limiting corrosion.

Additionally, in an embodiment wherein the connecting part is coupled to a corresponding wall made of FRP material, the welding of said connecting part made with CFRP-TP to the corresponding wall is preferably performed using:
- only resin or
- a resin wire with carbon fiber.

According to this embodiment, the mechanical properties of the weld are optimized.

In a second inventive aspect, the invention provides a method for assembling a double-wall tank according to any embodiment of the first inventive aspect, the method comprising the following steps:
i) providing an inner wall portion defining at least partially an inner chamber configured to house a fluid;
ii) providing an inner connecting part comprising at least one inner part hole;
iii) coupling the inner connecting part to the inner wall portion;
iv) providing an outer wall portion defining at least partially an outer chamber, said outer chamber being configured to house the inner chamber within;
v) providing an outer connecting part comprising at least one outer part hole;
vi) coupling the outer connecting part to the outer wall portion;
vii) providing at least one pipe;
viii) introducing at least a portion of the pipe through an inner part hole and through an inner wall hole;
ix) coupling, by means of a fluid-tight fit, the pipe in said inner part hole;
x) introducing at least a portion of the pipe through an outer part hole and through an outer wall hole;
xi) coupling, by means of a fluid-tight fit, the pipe in said outer part hole,

wherein the inner wall portion provided in step i) comprises at least one inner wall hole or the method comprises making at least one inner wall hole in the inner wall portion after step i),
and wherein the outer wall portion provided in step iv) comprises at least one outer wall hole or the method comprises making at least one outer wall hole in the outer wall portion after step iv).

In some embodiments the process of making a hole in the inner wall portion and/or in the outer wall portion, depending on the size of the hole, may include carrying out drilling and/or trimming tasks. Also, machining tasks may be carried out in case it is necessary to provide particular geometries required for the precise coupling of the parts involved.

Examples of such geometries may comprise providing a hole with a peripheral groove when any connecting part comprises a stepped profile caused by a peripheral flange, or with a frustoconical shape to receive a frustoconical connecting part.

In other embodiments, the process of making a hole in the inner and/or outer wall portion encompasses the manufacturing of the wall with such hole in it. In other words, the hole is generated during the manufacturing process of the wall without having to further machine the wall to obtain such hole.

Regarding the coupling of the connecting parts to the corresponding inner or outer wall, according to steps iii) and vi), it shall be understood that they are coupled by means of a fluid-tight fit.

In an embodiment, step iii) comprises arranging the inner connecting part relative to the inner wall portion such that the inner part hole and the inner wall hole of the inner wall portion are coincident.

In an embodiment, step vi) comprises arranging the outer connecting part relative to the outer wall such that the outer part hole and the outer wall hole of the outer wall are coincident.

In an embodiment, the at least one inner wall hole is made, after step iii), by means of a drilling and/or trimming process carried out through an inner part hole.

In an embodiment, the at least one outer wall hole is made, after step ix), by means of a drilling and/or trimming process carried out through an outer part hole.

Advantageously, in an embodiment wherein at least one inner and/or outer connecting part comprises a plurality of inner and/or outer part holes, making the inner and/or outer wall holes through the inner or outer part holes, such as by carrying out the necessary steps of drilling, trimming and/or machining, allows using the holes of the inner or outer part as reference, thus assuring the coincidence of holes in the inner/outer wall portion and holes in the inner/outer part.

In an embodiment, the method comprises the step of providing at least one layer of FRP material overwrapping:
- at least a portion of the inner wall portion; and
- at least a portion of the inner connecting part surrounding the inner part holes.

In an embodiment, the method comprises the step of providing at least one layer of FRP material overwrapping:
- at least a portion of the outer wall portion; and
- at least a portion of the outer connecting part surrounding the outer part holes.

In an embodiment, the method comprises a step of trimming FRP material of the corresponding inner or outer wall around the edges of the holes, if needed.

In an embodiment, at least one inner connecting part is a bushing comprising a cylindrical main body and a flange projecting radially outwardly from the cylindrical main body, and step iii) comprises arranging the bushing on the side of the inner wall portion configured for facing the interior of the inner chamber.

In an embodiment, at least one outer connecting part is a bushing comprising a cylindrical main body and a flange projecting radially outwardly from the cylindrical main body, and step ix) comprises arranging the bushing on the side of the outer wall portion configured for facing the outside of the tank.

In an embodiment, at least one bushing is embedded into a corresponding inner or outer wall made of FRP material.

In an embodiment, the inner wall portion and/or the outer wall portion is made of FRP material.

In an embodiment, the inner wall portion provided at step i) and/or the outer wall portion provided at step iv) is made of fresh FRP material, partially cured FRP material or completely cured FRP material.

The properties of any FRP structure, or composite material, are determined by the manufacturing process conditions. Accordingly, a 'partially cured', or 'pre-cured', FRP structure or element, should be understood as a structure composed of composite materials which have undergone an incomplete curing cycle, or 'partial curing cycle' compared to the application of a complete curing cycle under predetermined duration and temperature conditions according to which the FRP structures have reached the desired chemical and mechanical properties, and so can be considered as 'completely cured', or just 'cured'.

Accordingly, the partially cured FRP structures are processed so as to reach a degree of cure according to which the matrix has a higher molecular weight than typical resins in order to reduce resin flow, which provides a certain stiffness which facilitates handling, storage and later processing properties.

In an embodiment wherein the inner wall portion provided at step i) and/or the outer wall portion provided at step iv) is made of fresh or partially cured FRP material, the method comprises a step of curing the assembly of the inner wall portion, the outer wall portion, the coupled inner and outer connecting parts and the coupled pipe.

This curing process of fresh or partially cured elements allows to consolidate the aforementioned elements after they have been provided and coupled according to the steps of the method, thus resulting in a sequential concept which allows said elements to be integrated in a much more efficient and flexible manner compared to other configurations wherein the walls of the tank are manufactured as a monolithic/single piece and/or in a one-shot process.

In an embodiment wherein the method comprises a step of trimming excess FRP material at the edges of the holes, the trimming step may be performed before or after the curing cycle.

In an embodiment, the method comprises coupling the inner/outer wall portion to at least one additional inner/outer wall portion to configure a complete inner/outer chamber. In an embodiment wherein the tank comprises a cylindrical portion with dome-shaped ends, the inner/outer wall portion is one dome-shaped end and the additional inner/outer wall portions are the cylindrical portion and the other dome-shaped end.

In an embodiment, the method comprises wrapping with FRP material the assembly of the inner/outer wall portion and the at least one additional inner/outer wall portion and consolidating said portions by at least one of the following processes: co-curing or co-bonding.

According to a more particular embodiment, in the event that there is excess FRP material on the edges of the holes, or that it is necessary to perform trimming or machining tasks on the walls, such trimming and/or machining operations are performed after the step of partially or totally wrapping the connecting part with FRP material.

Examples of lay-up techniques regarded to manufacture the inner and/or outer walls provided in steps i) and iv), respectively, as well as the inner and/or outer connecting parts, when they are made of FRP material are Automated Tape Laying (ATL) or Automated Fibre Placement (AFP). Both processes are functionally similar, comprising applying resin-impregnated fibre material ('prepregs'). 'Prepregs' are composite materials made from "pre-impregnated" fibres and a partially cured polymer matrix, such as epoxy or phenolic resin, or even thermoplastic. The matrix is used to bond the fibres together. The curing process induces chemical reactions that create extensive cross-linking between polymer chains to produce an infusible and insoluble polymer network. During cross-linking at sufficiently high temperatures, the material changes from a liquid via a gel into a glass-like solid.

However, each process is used differently to achieve specific structure construction goals to provide strength or stiffness where needed. Particularly, the use of one or the other mainly depends on the geometry complexity of the part to manufacture, in which AFP allows higher curvatures.

Filament winding techniques are also regarded as techniques suitable for manufacturing the inner and/or outer walls provided in steps i) and iv), respectively, as well as the inner and/or outer connecting parts, when they are made of FRP material.

A 'filament winding' technique should be understood as a composite material structures manufacturing process used mainly for hollow parts, generally circular or oval section components, such as pipes and containers, and consisting of winding tensioned reinforcing fibre filaments and/or tapes, impregnated with a thermosetting resin, on male mold or mandrel. Conventionally, said male mold is rotated, while a carriage moves horizontally, orienting the fibres in the desired pattern. Once the male mold is completely covered to the desired thickness and distribution pattern of filaments, the resin may be cured. Once the resin has been cured, the male mold is removed (unmold process), leaving the final product hollow.

Filament winding is a process that can be automated, where the tension of the filaments can be carefully controlled. The orientation of the filaments can also be carefully controlled so that the layers are laminated and oriented differently from the previous layer. The angle at which the fibre of the lower layers is established determines the properties of the final product.

Examples of 'tooling' used for manufacturing a FRP structure comprise:
- molds;
- vacuum bags;
- caul plates;
- heating equipment;

Typically, a number of composite plies or tapes are laid-up one upon the other on a mold, thus resulting in a stack of plies. In this regard, a 'ply' should be understood as a single continuous area of composite material to be laid on a form, where two plies in the same layer do not normally overlap. The laying-up of plies forms a stack which is known as a 'laminate' or as a whole 'preform'. The molds, mandrels or male molds should be regarded as shaping surfaces for manufacturing an item on the mold so that the item acquires the shape of the mold at least on its face in contact with the mold.

Additionally, the fibrous material reinforcement may be glass (for Glass Fibre Reinforcement Polymer, 'GRFP'), carbon (for Carbon Fibre Reinforcement Polymer, 'CRFP'), polymer fibres or any other conventional material used as reinforcement. Among them, carbon is preferred.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic view of a transverse section of a portion of a double-wall tank according to an embodiment of the invention.
- Figure 2: This figure shows a schematic representation of a connecting part of a double-wall tank according to an embodiment of the invention.
- Figure 3: This figure shows a schematic view of a transverse section of a portion of double-wall tank according to an embodiment of the invention.
- Figure 4: This figure shows a schematic view of a transverse section of a portion of a double-wall tank according to an embodiment of the invention.
- Figure 5: This figure shows a schematic view of a transverse section of a portion of the inner wall of a double-wall tank according to an embodiment of the invention.
- Figure 6: This figure shows a schematic view of a transverse section of a portion of a double-wall tank according to an embodiment of the invention.

### DETAILED DESCRIPTION OF THE INVENTION

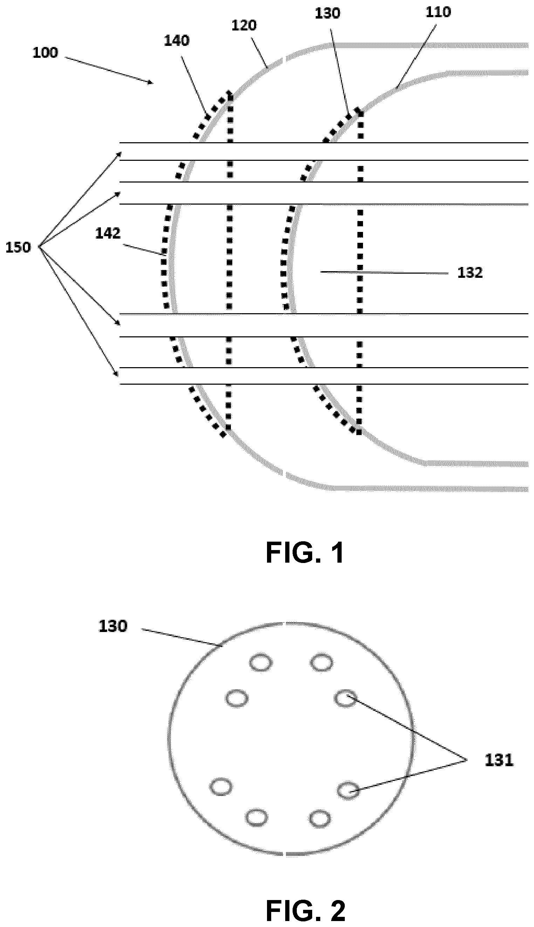

Figure 1 shows a schematic view of a transverse section of a portion of double-wall tank (100) according to an embodiment of the invention.

The double-wall tank (100) shown comprises four basic structural elements:
- an inner chamber intended for housing a fluid within, and which is defined by the inner wall (110) of the so called double-wall tank (100);
- an outer chamber, defined by the outer wall (120), which is arranged surrounding said inner chamber, said inner (110) and outer (120) walls being separated a distance defined by an intermediate gap between them, which, in the particular embodiment shown in Figure 1 is under vacuum conditions;
- a piping connecting system which comprises an inner connecting part (130) coupled to the inner wall (110) and an outer connecting part (140) coupled to the outer wall (120); and
- pipes (150), which in the particular embodiment shown are eight (four of them being shown in the schematic front view provided, the other four being arranged behind), passing through the outer (120) and inner (110) walls, as well as through the piping connecting system, each of the pipes being coupled to said piping connecting system.

The piping connecting system and the pipes (150) are configured to allow access to the inner chamber, while assuring the tightness of the fluid stored inside the inner chamber and allowing keeping vacuum in the gap between the inner wall (110) and the outer wall (120).

Regarding the vacuum condition in said gap between the inner wall (110) and the outer wall (120), in the embodiment shown gas is pumped out of the inner chamber until reaching ultra-high vacuum (UHV) conditions. According to this vacuum regime, operating pressure is lower than about 100 nanopascals (1.0×10⁻⁷ Pa; 1.0×10⁻⁹ mbar; 7.5×10⁻¹⁰ Torr).

In the embodiment shown in Figure 1, both the inner (110) and outer (120) walls comprise each eight respective wall holes, while the inner (130) and outer (140) connecting parts comprise each eight corresponding part holes, the inner (130) and outer (140) connecting parts being positioned relative to the inner (110) and outer (120) walls such that the corresponding inner/outer wall holes and the inner/outer part holes are coincident, to let each of the eight pipes (150) pass through.

As can be seen, regarding the geometric configuration of the double-wall tank (100), the inner and outer chambers have the same shape, wherein the outer chamber housing the inner chamber has a larger size. Additionally, the inner (110) and outer (120) walls comprise one dome-shaped portion arranged facing one another, each dome-shaped portion having a convex outer side and a concave inner side oriented towards the interior of the tank (100).

Additionally, for both chambers (i.e., the inner vessel defined by the inner wall (110), and the outer jacket defined by the outer wall (120)), only one of the two longitudinal ends is shown. It shall be understood that the complete embodiment of the schematic double-wall tank (100) shown comprises a symmetrical distribution for the inner chamber and the outer chamber, wherein two corresponding dome-shaped portions are spaced by a cylindrical central section. However the tank (100) may comprise connecting parts (130, 140) and pipes (150) crossing its walls (110, 120) at only one longitudinal end of its two opposite longitudinal ends.

In this sense, regarding the connections (not shown) necessary to fix and maintain the position of the inner chamber with respect to the outer chamber, preferably such connections will be provided only on one of the two ends of both the inner and outer chambers. More specifically, in the embodiment shown, said connections will be arranged on the dome-shaped portions shown for both the inner chamber and the outer chamber.

The inner (130) and outer (140) connecting parts of the piping connecting system are arranged at the dome-shaped portions of the inner (110) or outer (120) walls, respectively. Preferably, said dome-shaped portions of the inner (110) or outer (120) walls are the same portions where the connections (not shown) to fix and maintain the position of the inner chamber with respect to the outer chamber are provided.

In relation to said inner (130) and outer (140) connecting parts, further details of them are provided in Figure 2, where a front view of a schematic representation is depicted. As can be seen, in this embodiment said inner (130) and outer (140) connecting parts are configured as a curved sheet provided with a dome-shaped geometry.

Finally, in the embodiment shown in Figure 1, both the inner (130) and outer (140) dome-shaped connecting parts are made of INVAR, and the pipes (150) are metallic, each of them being welded to the inner (130) and outer (140) connecting parts through respective inner/outer part holes.

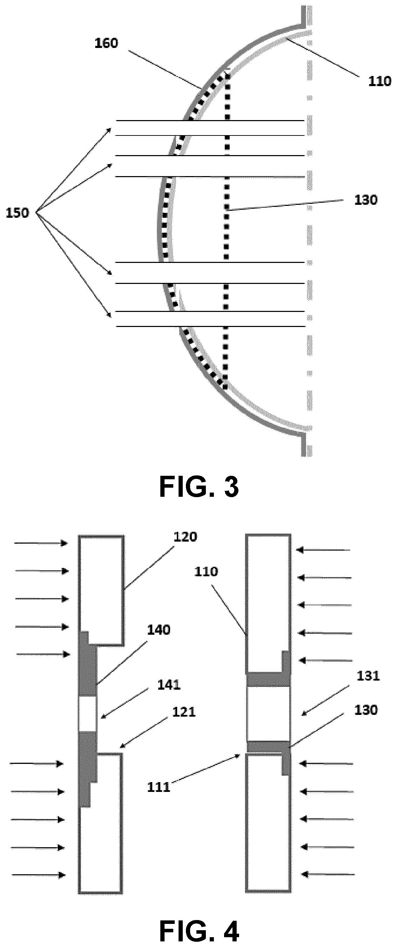

Figure 3 shows an embodiment as the one shown in Figure 1, but including a layer (160) of FRP material overwrapping a portion of the inner chamber and/or the outer chamber. For illustrative purposes, only an example of said layer (160) of FRP material is shown for the inner chamber (110). In particular, the layer of FRP material (160) is shown provided over the portion of inner wall (110) shown, as well as over the inner connecting part (130) coupled to said portion of inner wall (110). According to this embodiment, by overwrapping the inner connecting part (130) and the inner wall (110) with FRP material, the inner connecting part (130) becomes embedded in FRP material, improving its coupling, tightness and structural integrity with the inner wall (110).

Additionally, as can be seen, no layer of FRP material is provided over the part holes of the inner connection part (130), as the material would impede the passage of the pipes (150) through the corresponding part holes and wall holes.

Figure 4 shows a schematic view of a transverse section of a portion of double-wall tank (100) according to an embodiment of the invention. More particularly, Figure 4 focuses on providing constructive details of another configuration for the piping connection system. For this purpose, it shows schematically an enlarged view of the passage area of a pipe (150) through the inner and outer chambers. With regard to said piping connection system, it can be seen that, instead of a single dome-shaped structure comprising a plurality of holes in a number matching the plurality of holes provided in the corresponding wall (110, 120), both the outer connecting part (130) and the inner connecting part (140) are configured as two respective bushings that are coupled, and more specifically inserted, into two respective inner (111) and outer (121) wall holes.

Additionally, as can be seen, both bushings (130, 140) comprise a cylindrical main body and a flange projecting radially outwardly from said cylindrical main body, as well as corresponding inner part (131) and outer part (141) holes. Each bushing (130, 140) is inserted into the inner (110) and outer (120) wall, respectively, such that the inner part (131) and the outer part (141) holes are coincident with the corresponding inner (111) and outer (121) wall holes. More in particular, the inner part (131) and outer part (141) holes and the inner (111) and outer (121) wall holes are concentric, respectively.

Regarding the inner connecting part (130), it can be seen that the flange is arranged on the side of the inner wall (110) facing the interior of the inner chamber.

By arranging the flange of the bushing (130) on the side of the inner wall (110) facing the interior of the inner chamber, the vacuum suction originated in the intermediate gap between the inner wall (110) and the outer wall (120) favours the efficiency of the connection tightness at the interfaces between the inner wall (110) and the bushing (130), as the pressure exerts a force to keep the contact between both elements. Furthermore, said flange serves as a mechanical obstacle that prevents the bushing (130) from uncoupling due to the effect of vacuum suction.

In turn, regarding the outer connecting part (140), it can be seen that the flange is arranged on the side of the outer wall (120) facing the exterior of the outer chamber.

By arranging the flange on the side of the outer wall (120) facing the outside of the tank, the vacuum suction favours the efficiency of the connection tightness at the interfaces between the outer wall (120) and the bushing (140), as the pressure exerts a force to keep the contact between both elements. Furthermore, said flange serves as a mechanical obstacle that prevents the bushing (140) from uncoupling due to the effect of vacuum suction.

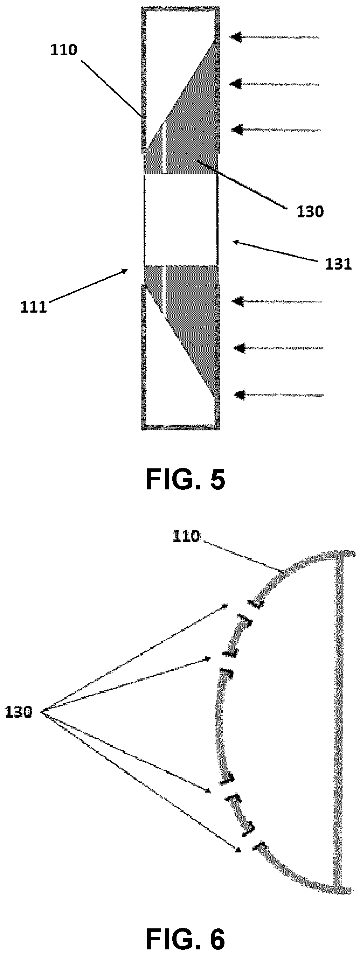

Figure 5 shows a schematic view of a transverse section of a portion of the inner wall (110) of a double-wall tank (100) according to an embodiment of the invention. In particular, the configuration of the inner wall (110) shown is similar to that of Figure 4. However, in this case, both the inner wall (110) itself and the bushing (130) shown coupled, and more specifically inserted, into the inner wall hole (111), are provided, respectively, with a frustoconical geometry.

As can be seen, said frustoconical geometry, in the cross-section shown, is represented as a trapezoidal shape of both the bushing (130) and the inner wall hole (111). In this trapezoidal shape, the major base is oriented towards the inside of the inner chamber intended for housing a pressurized fluid, and the minor base is oriented towards the intermediate gap between the inner wall (110) and the outer wall (120) intended to be under vacuum conditions. In this way, the effect of the pressure differential, which is shown with arrows pointing towards the inner surface of the inner wall (110), presses the bushing (130) and the inner wall (110) against each other along their respective conical surfaces, thus promoting the contact between them and increasing the structural integrity of the resulting assembly as well as the tightness of the joint.

Additionally, in relation to such coupling between the bushing (130) and the inner wall (110), in the embodiment shown, the bushing (130) is embedded in the inner wall (110). This integration is represented by means of part of the thick dark line delimiting the boundaries of the inner wall (110) extending and overlapping over a portion of the inner side of the bushing (130) (i.e., the major base of the trapezoidal shape). More specifically, one or more layer of a FRP laminate forming the inner wall (110) overlap on the inner face of the bushing (130).

The inner wall (110), in this particular case, is composed of a CFRP-TS. In this regard, according to the embodiment shown, both the process of embedding the bushing (130) and the provision of the conical geometry of the inner wall hole (111) take place at intermediate stages of the manufacture and consolidation of said inner wall (110), which ultimately results in a robust assembly, with optimal mechanical strength and sealing properties by, for example, a metal weld joint between the bushing (130) and the pipe (150) passing through it, compared to alternatives made solely of CFRP-TP.

Finally, although the details of the conical surface of the inner wall (110) in contact along the same with the bushing (130) are not shown, in an embodiment said surface has a stepped profile, as a result of the sequential arrangement of layers of a laminate of the composite material, each successive layer of the laminate having displaced wider hole in it with respect to a previous layer to give rise to said frustoconical surface.

Figure 6 shows a schematic view of a transverse section of a portion of double-wall tank (100) according to an embodiment of the invention. More in particular, using a configuration as the one shown in Figure 4 for the inner connecting parts (130), i.e. by implementing bushings inserted into the inner wall holes and optionally embedded into the inner wall (110). Figure 6 shows an inner wall (110) portion comprising four inner wall holes, wherein inside of each an inner connecting part (130) in the form of a bushing has been coupled.

Furthermore, as can be seen, said bushings (130) comprise a having a main cylindrical body and a flange projecting from the main cylindrical body, the flange abutting the inner face of the inner wall (110), such that said flange exerts resistance to the vacuum suction generated in the intermediate gap arranged between the inner wall (110) and the outer wall (120).

## Claims

1. A double-wall tank (100) comprising:
- an inner wall (110) defining an inner chamber configured to house a fluid, wherein the inner wall (110) comprises at least one inner wall hole (111);
- an outer wall (120) defining an outer chamber which houses the inner chamber within, wherein the outer wall (120) comprises at least one outer wall hole (121),
- a piping connecting system comprising:
∘ at least one inner connecting part (130) coupled to the inner wall (110), wherein the inner connecting part (130) comprises at least one inner part hole (131), and wherein the inner connecting part (130) is positioned relative to the inner wall (110) such that the inner part hole (131) and the inner wall hole (111) of the inner wall (110) are coincident; and
∘ at least one outer connecting part (140) coupled to the outer wall (120), wherein the outer connecting part (140) comprises at least one outer part hole (141), and wherein the outer connecting part (140) is positioned relative to the outer wall (120) such that the outer part hole (141) and the outer wall hole (121) of the outer wall (120) are coincident;
and
- at least one pipe (150) arranged passing:
∘ through an outer part hole (141) and through an outer wall hole (121); and
∘ through an inner part hole (131) and through an inner wall hole (111),
wherein the pipe (150) is coupled, by means of a fluid-tight fit, to said inner part hole (131) and outer part hole (141);
**characterised in that** the inner wall (110) and the outer wall (120) are composed of a thermoset carbon fibre reinforced polymer ('CFRP- TS'), and
**in that** the at least one inner connecting part (130) and the at least one outer connecting part (140) are metallic or made of Fibre Reinforced Polymer (FRP), preferably a Thermoplastic Carbon Fibre Reinforced Polymer (CFRP-TP).

2. The tank (100) according to claim 1, wherein at least one inner (130) and/or outer (140) connecting part is a bushing coupled, by means of a fluid-tight fit, to a corresponding inner (111) or outer (121) wall hole.

3. The tank (100) according to claim 2, wherein the bushing (130, 140) comprises a cylindrical main body and a flange projecting radially outwardly from the cylindrical main body, wherein said flange is arranged:
- on an inner side of the inner wall (110) facing the interior of the inner chamber when the bushing (130) is arranged on the inner wall (110), or
- on an outer side of the outer wall (110) facing the outside of the tank (100) when the bushing (140) is arranged on the outer wall (120).

4. The tank (100) according to any of the previous claims, wherein the inner wall (110) and the outer wall (120) comprise, respectively, a plurality of inner (111) and outer (121) wall holes, wherein the tank (100) comprises a plurality of pipes (150), arranged passing:
- through an outer wall hole (121); and
- through an inner wall hole (111).

5. The tank (100) according to claim 4, wherein:
- at least one inner connecting part (130) comprises a plurality of inner part holes (131) and/or the tank (100) comprises a plurality of inner connecting parts (130); wherein the one or more inner connecting parts (130) are positioned relative to the inner wall (110, 120) such that the inner part holes (131) and the inner wall holes (111) are coincident; and/or
- at least one outer connecting part (140) comprises a plurality of outer part holes (141) and/or the tank (100) comprises a plurality of outer connecting parts (140); wherein the one or more outer connecting parts (140) are positioned relative to the outer wall (120) such that the outer part holes (141) and the outer wall holes (121) are coincident.

6. The tank (100) according to any of the previous claims, wherein at least a portion of the inner (110) and/or the outer (120) walls, and at least a portion of the connecting parts (130, 140) surrounding the part holes (131, 141) are overwrapped by a layer (160) of Fibre Reinforced Polymer (FRP) material.

7. The tank (100) according to any of the previous claims, wherein the gap between the inner wall (110) and the outer wall (120) is under vacuum conditions.

8. A method for assembling a double-wall tank (100) according to any of claims 1-7, the method comprising the following steps:
i) providing an inner wall portion defining at least partially an inner chamber configured to house a fluid;
ii) providing an inner connecting part (130) comprising at least one inner part hole (131);
iii) coupling the inner connecting part (130) to the inner wall portion;
iv) providing an outer wall portion defining at least partially an outer chamber, said outer chamber being configured to house the inner chamber within;
v) providing an outer connecting part (140) comprising at least one outer part hole (141);
vi) coupling the outer connecting part (140) to the outer wall portion;
vii) providing at least one pipe (150);
viii) introducing at least a portion of the pipe (150) through an inner part hole (131) and through an inner wall hole (111);
ix) coupling, by means of a fluid-tight fit, the pipe (150) in said inner part hole (131);
x) introducing at least a portion of the pipe (150) through an outer part hole (141) and through an outer wall hole (121);
xii) coupling, by means of a fluid-tight fit, the pipe (150) in said outer part hole (141), wherein the inner wall portion provided in step i) comprises at least one inner wall hole (111) or the method comprises making at least one inner wall hole (111) in the inner wall portion after step i),
and wherein the outer wall portion provided in step iv) comprises at least one outer wall hole (121) or the method comprises making at least one outer wall hole (121) in the outer wall portion after step iv).

9. The method according to claim 8, wherein:
- step iii) comprises arranging the inner connecting part (130) positioned relative to the inner wall portion such that the inner part hole (131) and the inner wall hole (111) of the inner wall portion are coincident; and/or
- step vi) comprises arranging the outer connecting part (140) positioned relative to the outer wall (120) such that the outer part hole (141) and the outer wall hole (121) of the outer wall (120) are coincident.

10. The method according to any of claims 8 or 9, wherein:
- the at least one inner wall hole (111) is made, after step iii), by means of a drilling and/or trimming process carried out through an inner part hole (131); and/or
- the at least one outer wall hole (121) is made, after step ix), by means of a drilling and/or trimming process carried out through an outer part hole (141).

11. The method according to any of claims 8 to 10 further comprising the step of providing at least one layer (160) of FRP material overwrapping:
- at least a portion of the inner and/or the outer wall portions; and
- at least a portion of the inner (130) and/or outer (140) connecting parts surrounding the inner (131) or outer (141) part holes.

12. The method according to any of claims 8 to 11, wherein at least one inner (130) and/or outer (140) connecting part is a bushing comprising a cylindrical main body and a flange projecting radially outwardly from the cylindrical main body, and wherein step iii) and/or ix) comprises arranging the bushing (130, 140):
- on the side of the inner wall portion configured for facing the interior of the inner chamber when the bushing (130) is arranged in the inner wall portion, or
- on the side of the outer wall portion configured for facing the outside of the tank (100) when the bushing (140) is arranged in the outer wall portion.

## Patentansprüche

1. Doppelwandiger Tank (100), der Folgendes umfasst:
- eine Innenwand (110), die eine Innenkammer definiert, die dazu ausgelegt ist, ein Fluid aufzunehmen, wobei die Innenwand (110) mindestens ein Innenwandloch (111) umfasst;
- eine Außenwand (120), die eine Außenkammer definiert, in der die Innenkammer eingehaust ist, wobei die Außenwand (120) mindestens ein Außenwandloch (121) umfasst,
- ein Rohrverbindungssystem, das Folgendes umfasst:
∘ mindestens ein inneres Verbindungsteil (130), das mit der Innenwand (110) gekoppelt ist, wobei das innere Verbindungsteil (130) mindestens ein Innenteilloch (131) umfasst und wobei das innere Verbindungsteil (130) relativ zu der Innenwand (110) so positioniert ist, dass das Innenteilloch (131) und das Innenwandloch (111) der Innenwand (110) zusammenfallen; und
∘ mindestens ein äußeres Verbindungsteil (140), das mit der Außenwand (120) gekoppelt ist, wobei das äußere Verbindungsteil (140) mindestens ein Außenteilloch (141) umfasst und wobei das äußere Verbindungsteil (140) relativ zu der Außenwand (120) so positioniert ist, dass das Außenteilloch (141) und das Außenwandloch (121) der Außenwand (120) zusammenfallen;
und
- mindestens ein Rohr (150), das durchgehend angeordnet ist:
∘ durch ein Außenteilloch (141) und durch ein Außenwandloch (121); und
∘ durch ein Innenteilloch (131) und durch ein Innenwandloch (111), wobei das Rohr (150) mittels einer fluiddichten Passung mit dem Innenteilloch (131) und dem Außenteilloch (141) gekoppelt ist;
**dadurch gekennzeichnet, dass**
die Innenwand (110) und die Außenwand (120) aus einem duroplastischen kohlefaserverstärkten Polymer ("CFRP-TS") bestehen, und
dadurch, dass das mindestens eine innere Verbindungsteil (130) und das mindestens eine äußere Verbindungsteil (140) metallisch sind oder aus faserverstärktem Polymer (FRP), vorzugsweise einem thermoplastischen, kohlefaserverstärkten Polymer (CFRP-TP), bestehen.

2. Tank (100) nach Anspruch 1, wobei mindestens ein inneres (130) und/oder äußeres (140) Verbindungsteil eine Buchse ist, die mittels einer fluiddichten Passung mit einem entsprechenden Innen- (111) oder Außenwandloch (121) gekoppelt ist.

3. Tank (100) nach Anspruch 2, wobei die Buchse (130, 140) einen zylindrischen Hauptkörper und einen Flansch umfasst, der von dem zylindrischen Hauptkörper radial nach außen vorsteht, wobei der Flansch angeordnet ist:
- an einer dem Innenraum der Innenkammer zugewandten Innenseite der Innenwand (110), wenn die Buchse (130) an der Innenwand (110) angeordnet ist, oder
- an einer der Außenseite des Tanks (100) zugewandten Außenseite der Außenwand (110), wenn die Buchse (140) an der Außenwand (120) angeordnet ist.

4. Tank (100) nach einem der vorhergehenden Ansprüche, wobei die Innenwand (110) und die Außenwand (120) jeweils mehrere Innen- (111) und Außenwandlöcher (121) umfassen, wobei der Tank (100) mehrere Rohre (150) umfasst, die durchgehend angeordnet sind:
- durch ein Außenwandloch (121); und
- durch ein Innenwandloch (111).

5. Tank (100) nach Anspruch 4, wobei:
- mindestens ein inneres Verbindungsteil (130) mehrere Innenteillöcher (131) umfasst und/oder der Tank (100) mehrere innere Verbindungsteile (130) umfasst; wobei das eine oder die mehreren inneren Verbindungsteile (130) relativ zu der Innenwand (110, 120) so positioniert sind, dass die Innenteillöcher (131) und die Innenwandlöcher (111) zusammenfallen; und/oder
- mindestens ein äußeres Verbindungsteil (140) mehrere Außenteillöcher (141) umfasst und/oder der Tank (100) mehrere äußere Verbindungsteile (140) umfasst; wobei das eine oder die mehreren äußeren Verbindungsteile (140) relativ zu der Außenwand (120) so positioniert sind, dass die Außenteillöcher (141) und die Außenwandlöcher (121) zusammenfallen.

6. Tank (100) nach einem der vorhergehenden Ansprüche, wobei mindestens ein Teil der Innen- (110) und/oder Außenwände (120) und mindestens ein Teil der Verbindungsteile (130, 140), die die Teillöcher (131, 141) umgeben, von einer Schicht (160) aus faserverstärktem Polymermaterial (FRP) umhüllt sind.

7. Tank (100) nach einem der vorhergehenden Ansprüche, wobei der Spalt zwischen der Innenwand (110) und der Außenwand (120) unter Vakuumbedingungen steht.

8. Verfahren zur Montage eines doppelwandigen Tanks (100) nach einem der Ansprüche 1-7, wobei das Verfahren die folgenden Schritte umfasst:
i) Bereitstellen eines Innenwandabschnitts, der mindestens teilweise eine Innenkammer definiert, die dazu ausgelegt ist, ein Fluid aufzunehmen;
ii) Bereitstellen eines inneren Verbindungsteils (130), das mindestens ein Innenteilloch (131) umfasst;
iii) Koppeln des inneren Verbindungsteils (130) mit dem Innenwandabschnitt;
iv) Bereitstellen eines Außenwandabschnitts, der zumindest teilweise eine Außenkammer definiert, wobei die Außenkammer dazu ausgelegt ist, die Innenkammer darin einzuhausen;
v) Bereitstellen eines äußeren Verbindungsteils (140), das mindestens ein Außenteilloch (141) umfasst;
vi) Koppeln des äußeren Verbindungsteils (140) mit dem Außenwandabschnitt;
vii) Bereitstellen mindestens eines Rohrs (150);
viii) Einführen mindestens eines Teils des Rohrs (150) durch ein Innenteilloch (131) und durch ein Innenwandloch (111);
ix) Koppeln, mittels einer fluiddichten Passung, des Rohres (150) in dem Innenteilloch (131);
x) Einführen mindestens eines Teils des Rohrs (150) durch ein Außenteilloch (141) und durch ein Außenwandloch (121);
xii) Koppeln, mittels einer fluiddichten Passung, des Rohrs (150) in dem Außenteilloch (141), wobei der in Schritt i) bereitgestellte Innenwandabschnitt mindestens ein Innenwandloch (111) umfasst oder wobei das Verfahren das Herstellen mindestens eines Innenwandlochs (111) in dem Innenwandabschnitt nach Schritt i) umfasst,
und wobei der in Schritt iv) bereitgestellte Außenwandabschnitt mindestens ein Außenwandloch (121) umfasst oder wobei das Verfahren das Herstellen mindestens eines Außenwandlochs (121) in dem Außenwandabschnitt nach Schritt iv) umfasst.

9. Verfahren nach Anspruch 8, wobei:
- Schritt iii) Anordnen des inneren Verbindungsteils (130), das relativ zu dem Innenwandabschnitt positioniert ist, umfasst, so dass das Innenteilloch (131) und das Innenwandloch (111) des Innenwandabschnitts zusammenfallen; und/oder
- Schritt vi) das Anordnen des äußeren Verbindungsteils (140), das relativ zu der Außenwand (120) positioniert ist, umfasst, so dass das Außenteilloch (141) und das Außenwandloch (121) der Außenwand (120) zusammenfallen.

10. Verfahren nach einem der Ansprüche 8 oder 9, wobei:
- das mindestens eine Innenwandloch (111) nach Schritt iii) durch einen Bohr- und/oder Fräsvorgang hergestellt wird, der durch ein Innenteilloch (131) durchgeführt wird; und/oder
- das mindestens eine Außenwandloch (121) nach Schritt ix) mittels eines Bohr- und/oder Fräsvorgangs hergestellt wird, der durch ein Außenteilloch (141) durchgeführt wird.

11. Verfahren nach einem der Ansprüche 8 bis 10, ferner umfassend den Schritt des Bereitstellens mindestens einer Schicht (160) aus FRP-Material, die Folgendes umhüllt:
- mindestens einen Teil der Innen- und/oder Außenwandabschnitte; und
- mindestens ein Teil der inneren (130) und/oder äußeren (140) Verbindungsteile, die die Innen- (131) oder Außenteillöcher (141) umgeben.

12. Verfahren nach einem der Ansprüche 8 bis 11, wobei mindestens ein inneres (130) und/oder äußeres (140) Verbindungsteil eine Buchse ist, die einen zylindrischen Hauptkörper und einen Flansch umfasst, der von dem zylindrischen Hauptkörper radial nach außen vorsteht, und wobei Schritt iii) und/oder ix) Anordnen der Buchse (130, 140) umfasst:
- auf der Seite des Innenwandabschnitts, der dazu ausgelegt ist, dem Innenraum der Innenkammer zugewandt zu sein, wenn die Buchse (130) in dem Innenwandabschnitt angeordnet ist, oder
- auf der Seite des Außenwandabschnitts, der dazu ausgelegt ist, der Außenseite des Tanks (100) zugewandt zu sein, wenn die Buchse (140) in dem Außenwandabschnitt angeordnet ist.

## Revendications

1. Réservoir à double paroi (100) comprenant :
- une paroi interne (110) définissant une chambre interne conçue pour loger un fluide, la paroi interne (110) comprenant au moins un trou de paroi interne (111) ;
- une paroi externe (120) définissant une chambre externe qui loge en son sein la chambre interne, la paroi externe (120) comprenant au moins un trou de paroi externe (121),
- un système de raccordement de canalisation comprenant :
∘ au moins une partie de raccordement interne (130) accouplée à la paroi interne (110), la partie de raccordement interne (130) comprenant au moins un trou de partie interne (131), et la partie de raccordement interne (130) étant positionnée par rapport à la paroi interne (110) de sorte que le trou de partie interne (131) et le trou de paroi interne (111) de la paroi interne (110) coïncident ; et
∘ au moins une partie de raccordement externe (140) accouplée à la paroi externe (120), la partie de raccordement externe (140) comprenant au moins un trou de partie externe (141), et la partie de raccordement externe (140) étant positionnée par rapport à la paroi externe (120) de sorte que le trou de partie externe (141) et le trou de paroi externe (121) de la paroi externe (120) coïncident ; et
- au moins un conduit (150) disposé de sorte à passer :
∘ à travers un trou de partie externe (141) et à travers un trou de paroi externe (121) ; et
∘ à travers un trou de partie interne (131) et à travers un trou de paroi interne (111), le conduit (150) étant raccordé, au moyen d'un ajustement étanche, auxdits trou de partie interne (131) et trou de partie externe (141) ;
**caractérisé en ce que**
la paroi interne (110) et la paroi externe (120) sont composées d'un polymère renforcé de fibres de carbone thermodurci (« CFRP-TS »), et
**en ce que** l'au moins une partie de raccordement interne (130) et l'au moins une partie de raccordement externe (140) sont métalliques ou en polymère renforcé de fibres (FRP), de préférence en polymère renforcé de fibres de carbone thermoplastiques (CFRP-TP).

2. Réservoir (100) selon la revendication 1, au moins une partie de raccordement interne (130) et/ou externe (140) étant une douille accouplée, au moyen d'un ajustement étanche, à un trou de paroi interne (111) ou externe (121) correspondant.

3. Réservoir (100) selon la revendication 2, la douille (130, 140) comprenant un corps principal cylindrique et une bride faisant saillie radialement vers l'extérieur à partir du corps principal cylindrique, ladite bride étant disposée :
- sur un côté intérieur de la paroi interne (110) tourné vers l'intérieur de la chambre interne lorsque la douille (130) est disposée sur la paroi interne (110), ou
- sur un côté extérieur de la paroi externe (110) tourné vers l'extérieur du réservoir (100) lorsque la douille (140) est disposée sur la paroi externe (120).

4. Réservoir (100) selon l'une quelconque des revendications précédentes, la paroi interne (110) et la paroi externe (120) comprenant, respectivement, une pluralité de trous de paroi interne (111) et externe (121), le réservoir (100) comprenant une pluralité de conduits (150), disposés de sorte à passer :
- à travers un trou de paroi externe (121) ; et
- à travers un trou de paroi interne (111).

5. Réservoir (100) selon la revendication 4,
- au moins une partie de raccordement interne (130) comprenant une pluralité de trous de partie interne (131) et/ou le réservoir (100) comprenant une pluralité de parties de raccordement internes (130) ; la ou les parties de raccordement internes (130) étant positionnées par rapport à la paroi interne (110, 120) de sorte que les trous de partie interne (131) et les trous de paroi interne (111) coïncident ; et/ou
- au moins une partie de raccordement externe (140) comprenant une pluralité de trous de partie externe (141) et/ou le réservoir (100) comprenant une pluralité de parties de raccordement externes (140) ; la ou les parties de raccordement externes (140) étant positionnées par rapport à la paroi externe (120) de sorte que les trous de partie externe (141) et les trous de paroi externe (121) coïncident.

6. Réservoir (100) selon l'une quelconque des revendications précédentes, au moins une partie des parois interne (110) et/ou externe (120), et au moins une partie des parties de raccordement (130, 140) entourant les trous de partie (131, 141) étant surenveloppées par une couche (160) de matériau polymère renforcé de fibres (FRP).

7. Réservoir (100) selon l'une quelconque des revendications précédentes, l'espace entre la paroi interne (110) et la paroi externe (120) étant dans des conditions de vide.

8. Procédé d'assemblage d'un réservoir à double paroi (100) selon l'une quelconque des revendications 1 à 7, le procédé comprenant les étapes consistant à :
i) fournir une partie paroi interne définissant au moins partiellement une chambre interne conçue pour loger un fluide ;
ii) fournir une partie de raccordement interne (130) comprenant au moins un trou de partie interne (131) ;
iii) accoupler la partie de raccordement interne (130) à la partie paroi interne ;
iv) fournir une partie paroi externe définissant au moins partiellement une chambre externe, ladite chambre externe étant conçue pour loger la chambre interne en son sein ;
v) fournir une partie de raccordement externe (140) comprenant au moins un trou de partie externe (141) ;
vi) accoupler la partie de raccordement externe (140) à la partie paroi externe ;
vii) fournir au moins un conduit (150) ;
viii) introduire au moins une partie du conduit (150) à travers un trou de partie interne (131) et à travers un trou de paroi interne (111) ;
ix) accoupler, au moyen d'un ajustement étanche, le conduit (150) dans ledit trou de partie interne (131) ;
x) introduire au moins une partie du conduit (150) à travers un trou de partie externe (141) et à travers un trou de paroi externe (121) ;
xii) accoupler, au moyen d'un ajustement étanche, le conduit (150) dans ledit trou de partie externe (141), la partie paroi interne fournie à l'étape i) comprenant au moins un trou de paroi interne (111) ou le procédé comprenant l'étape consistant à réaliser au moins un trou de paroi interne (111) dans la partie paroi interne après l'étape i),
et la partie paroi externe fournie à l'étape iv) comprenant au moins un trou de paroi externe (121) ou le procédé comprenant l'étape consistant à réaliser au moins un trou de paroi externe (121) dans la partie paroi externe après l'étape iv).

9. Procédé selon la revendication 8,
- l'étape iii) comprenant l'étape consistant à disposer la partie de raccordement interne (130) positionnée par rapport à la partie paroi interne de sorte que le trou de partie interne (131) et le trou de paroi interne (111) de la partie paroi interne coïncident ; et/ou
- l'étape vi) comprenant l'étape consistant à disposer la partie de raccordement externe (140) positionnée par rapport à la paroi externe (120) de sorte que le trou de partie externe (141) et le trou de paroi externe (121) de la paroi externe (120) coïncident.

10. Procédé selon l'une quelconque des revendications 8 et 9,
- l'au moins un trou de paroi interne (111) étant réalisé, après l'étape iii), au moyen d'un procédé de perçage et/ou de détourage réalisé à travers un trou de partie interne (131) ; et/ou
- l'au moins un trou de paroi externe (121) étant réalisé, après l'étape ix), au moyen d'un procédé de perçage et/ou de détourage réalisé à travers un trou de partie externe (141).

11. Procédé selon l'une quelconque des revendications 8 à 10, comprenant en outre l'étape consistant à fournir au moins une couche (160) de matériau FRP surenveloppant :
- au moins une partie des parties paroi interne et/ou externe ; et
- au moins une partie des parties de raccordement interne (130) et/ou externe (140) entourant les trous de partie interne (131) ou externe (141).

12. Procédé selon l'une quelconque des revendications 8 à 11, au moins une partie de raccordement interne (130) et/ou externe (140) étant une douille comprenant un corps principal cylindrique et une bride faisant saillie radialement vers l'extérieur à partir du corps principal cylindrique, et l'étape iii) et/ou ix) comprenant l'étape consistant à placer la douille (130, 140) :
- du côté de la partie paroi interne conçu pour faire face à l'intérieur de la chambre interne lorsque la douille (130) est disposée dans la partie paroi interne, ou
- du côté de la partie paroi externe conçu pour faire face à l'extérieur du réservoir (100) lorsque la douille (140) est disposée dans la partie paroi externe.
